# EUROPEAN PATENT SPECIFICATION

(11) **EP 2 077 195 B1**
(45) Date of publication and mention of the grant of the patent: **23.11.2011**
(21) Application number: 07830313.8
(22) Date of filing: 22.10.2007
(51) Int. Cl.: B60C 15/06, B60C 15/00

(54) **PNEUMATIC TIRE**
LUFTREIFEN
PNEUMATIQUE

(30) Priority: 20.10.2006 JP 2006286067
(43) Date of publication of application: 08.07.2009
(73) Proprietor: Bridgestone Corporation, Tokyo 104-8340 (JP)
(72) Inventor: MIYAZONO, Toshiya c/oBRIDGESTONE CORPORATION, Kodaira-shi Tokyo 1878531 (JP)
(74) Representative: Whalley, Kevin
(86) International application number: PCT/JP2007/070579
(87) International publication number: WO 2008/047939

(56) References cited:
- JP-A- 2001 191 758
- JP-A- 2001 191 758
- JP-A- 2002 500 122
- JP-A- 2002 500 123
- JP-A- 2006 175 955
- JP-A- 2006 188 147
- US-A1- 2005 126 675

## Description

### Technical Field

The present invention relates to a pneumatic tire having a carcass formed of at least one ply constituted of: a main body extending in a toroidal shape over respective portions including a pair of bead portions having bead cores embedded therein, a pair of sidewall portions extending on the outer side in the tire radial direction from the bead portions, and a tread portion extending over the respective sidewall portions; and a folded portion extending from the main body and being folded around the respective bead cores from the inner side toward the outer side in the tire widthwise direction and, in particular, to a pneumatic having the structure as described above in which durability of the bead portions thereof has been improved.

### Prior Art

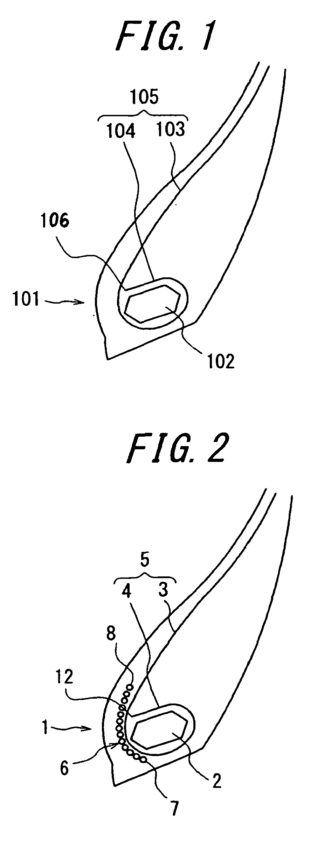

In the conventional pneumatic tire, as shown in Fig. 1, at least one carcass 105, extending in a toroidal shape from a tread portion (not shown) to respective bead portions 101 via respective sidewall portions, is generally folded around respective bead cores 102 embedded in respective bead portions 101 from the inner side toward the outer side in the tire widthwise direction to be held thereon. In such a structure of the bead portions as described above, when a tire assembled with a rim is rotated with a load applied thereon, the respective bead portions 101 on the outer side in the tire radial direction of rim flanges tend to collapse-deform repeatedly toward the outer side in the tire widthwise direction. Due to this, stresses are concentrated at a carcass portion and a folded end 106 which are collapse-deformed, whereby cracks are generated between rubber and a carcass 105 and thus the carcass portion and the folded end 106 which are collapse-deformed tend to be easily separated from the rubber.

Therefore, in order to prevent the folded end from being separated from rubber as described above, JP 2001-191758, for example, proposes providing a reinforcing layer for enhancing rigidity at a region of a bead portion which tends to collapse-deform and receive concentrated stresses when a tire is rotated with a load applied thereon, in order to suppress collapse-deformation of the bead portion and thus prevent separation of the carcass from the rubber from occurring.

### Disclosure of the Invention

In the invention disclosed in JP 2001-191758, the collapse-deformation of the bead portion is suppressed such that separation of the carcass from rubber at the bead portion is effectively prevented. In the present invention, the inventor significantly improved durability of the bead portions of JP 2001-191758.

An object of the present invention is to provide a pneumatic tire in which the structure of a bead portion is optimized to prevent strength of cords constituting a carcass from deteriorating and improve durability of the bead portion.

In order to achieve the aforementioned object, the present invention provides a pneumatic tire having a carcass formed of at least one rubber-coated ply constituted of: a main body extending in a toroidal shape over respective portions including a pair of bead portions having bead cores embedded therein, a pair of sidewall portions extending on the outer side in the tire radial direction from the bead portions, and a tread portion extending over the respective sidewall portions; and a folded portion extending from the main body and being folded around the respective bead cores from the inner side toward the outer side in the tire widthwise direction, the tire comprising at least one circumferential direction reinforcing layer formed of cords extending substantially in the tire circumferential direction and rubber coating thereon, the end on the inner side in the tire radial direction of the reinforcing layer being disposed on the inner face of the carcass and the end on the outer side in the tire radial direction thereof being embedded in the bead portion such that the end on the outer side in the tire radial direction is distanced from the carcass. In the structure described above, collapse-deformation at each bead portion is suppressed by the circumferential direction reinforcing layer, whereby the carcass is prevented from being separated from the rubber. Further, since the end on the outer side in the tire radial direction of the circumferential direction reinforcing layer is disposed so as to be distanced from the carcass, stresses do not concentrate on a carcass portion corresponding to the end on the outer side in the tire radial direction and the vicinities thereof of the circumferential direction reinforcing layer when the tire is rotated with a load applied thereon and stresses are dispersed, whereby deterioration of strength of the cords of the carcass portion is sufficiently suppressed and breakage of the carcass is effectively prevented. In the present specification, "extending substantially in the tire circumferential direction" represents, when a circumferential direction reinforcing layer is formed by continuously winding a single cord in a spiral shape, the cord extending with inclination of a very small angle, which inclination inevitably occurs in actual production.

Further, it is preferable that the circumferential direction reinforcing layer extends along the inner face of the carcass by a predetermined length from the end portion on the inner side toward the outer side in the tire radial direction and starts separating from the carcass such that the separation distance between the circumferential direction reinforcing layer and the carcass gradually increases toward the end portion on the outer side in the tire radial direction of the circumferential direction reinforcing layer. In the present specification, a "separation distance" represents a value obtained by subtracting a distance between the center position in thickness of the circumferential direction reinforcing layer and that of the carcass, measured along the tire widthwise direction, in the non-separating state (in a state in which the circumferential direction reinforcing layer extends adjacent to the carcass), from a distance between the center position in thickness of the circumferential direction reinforcing layer and that of the carcass, measured along the tire widthwise direction, in the separating state in which the circumferential direction reinforcing layer is separated from the carcass.

Yet further, the end portion on the outer side in the tire radial direction of each reinforcing layer is preferably positioned, when viewed from the tire radial direction, on the outer side of the outermost end of the bead core. In the present specification, "the outermost end of a bead core" represents the outermost position in the tire radial direction of a bead core.

Yet further, it is preferable that the circumferential direction reinforcing layer starts separating from the carcass on the outer side in the tire radial direction of the outermost end of the bead core.

Yet further, the separation distance between the carcass and the end on the outer side in the tire radial direction of the circumferential direction reinforcing layer is preferably in a range of 0.5 to 7.0 mm and more preferably in a range of 0.7 to 5.0 mm.

Yet further, in the invention a soft rubber layer formed of rubber having 100% modulus lower than that of the coating rubber for the cords constituting the carcass is disposed in a region where the circumferential direction reinforcing layer is distanced from the carcass.

Yet further, it is preferable that the end portion on the outer side in the tire radial direction of the soft rubber layer is positioned on the outer side in the tire radial direction of the end portion in the outer side in the tire radial direction of the circumferential direction outer reinforcing layer.

Yet further, the ratio of 100% modulus of the soft rubber constituting the soft rubber layer with respect to that of the coating rubber for the cords constituting the carcass is preferably in a range of 0.4 to 0.9 and more preferably in a range of 0.5 to 0.7.

Yet further, 100% modulus of the soft rubber constituting the soft rubber layer is in a range of 1.5 to 6.5 MPa and more preferably in a range of 2.5 to 5.0 MPa.

Yet further, it is preferable that the entire part of the folded portion of the carcass is folded along the bead core. It is further preferable that this folded portion of the carcass is plastically folded.

Yet further, it is preferable that the driving density of cords in each of the respective circumferential direction reinforcing layers is relatively small at the end portion on the outer side in the tire radial direction thereof, as compared with the cord driving density at other portions of the circumferential direction reinforcing layer.

Yet further, it is preferable that the driving density of cords in each of the respective circumferential direction reinforcing layers gradually increases from the end portion on the outer side in the tire radial direction of the circumferential direction reinforcing portion toward a position thereof on the inner side in the tire widthwise direction at the innermost end in the tire widthwise direction of the bead core. In the present specification, "the innermost end in the tire widthwise direction of a bead core" represents the innermost position in the tire widthwise direction of the bead core.

Yet further, it is preferable that the circumferential direction reinforcing layer is provided, when viewed in the tire widthwise direction, at least in a section where the bead core is present. In this structure, it is preferable that a slant reinforcing layer formed of cords and coating rubber thereon is disposed such that the slant reinforcing layer is adjacent to the circumferential direction reinforcing layer on the inner side in the tire radial direction of the circumferential direction reinforcing layer, passes on the inner side in the tire radial direction of the bead core, and extends inclined with respect to the tire circumferential direction from the outer side in the tire widthwise direction toward the outer side in the tire radial direction. In the present specification, the recitation that "the slant reinforcing layer is adjacent to the circumferential direction reinforcing layer" represents that, in a sectional view in the tire widthwise direction, the end portion on the outer side in the tire radial direction of the slant reinforcing layer abuts with the end portion on the inner side in the tire radial direction of the circumferential direction reinforcing layer without the one end portion overlapping the other, or the two end portions are separate, and the slant reinforcing layer extends from the circumferential direction reinforcing layer. Further, the recitation that "the slant reinforcing layer extends inclined with respect to the tire circumferential direction" represents that the slant reinforcing layer is inclined, with respect to the tire circumferential direction, in the tire radial direction.

### Effect of the Invention

According to the present invention, there can be provided a pneumatic tire in which the structure of a bead portion is optimized to prevent strength of cords constituting a carcass from being deteriorated due to fatigue, so that durability of the bead portion can be improved.

### Brief Description of the Drawings

Fig. 1 is a sectional view in the tire widthwise direction of a tire having the conventional structure of a bead portion.
Fig. 2 is a sectional view in the tire widthwise direction of an example of a tire having a structure of a bead portion according to the present invention.
Fig. 3 is a sectional view in the tire widthwise direction of an example of a tire having a structure of a bead portion according to the present invention.
Fig. 4 is a sectional view in the tire widthwise direction of an example of a tire having a structure of a bead portion according to the present invention.
Fig. 5 is a sectional view in the tire widthwise direction of an example of a tire having a structure of a bead portion according to the present invention.
Fig. 6 is a sectional view in the tire widthwise direction of an example of a tire having a structure of a bead portion according to the present invention.
Fig. 7 is a sectional view in the tire widthwise direction of an example of a tire having a structure of a bead portion according to the present invention.
Fig. 8 is a sectional view in the tire widthwise direction of a tire having a structure of a bead portion according to the present invention.
Fig. 9 is a sectional view in the tire widthwise direction of a tire having a structure of a bead portion according to the present invention.
Fig. 10 is a sectional view in the tire widthwise direction of a tire having a structure of a bead portion according to the present invention.
Fig. 11 is a sectional view in the tire widthwise direction of a tire having a structure of a bead portion according to the present invention.
Fig. 12 is a view showing a distance in the tire widthwise direction between the center position in thickness of the circumferential direction reinforcing layer and that of the carcass.

### Explanation of Reference Numerals

- 1: Bead portion
- 2: Bead core
- 3: Main body
- 4: Folded portion
- 5: Carcass
- 6: Circumferential direction reinforcing layer
- 7: End portion on the inner side in the tire radial direction of the circumferential direction reinforcing layer
- 8: End portion on the outer side in the tire radial direction of the circumferential direction reinforcing layer
- 9: Center position in thickness of the circumferential direction reinforcing layer
- 10: Center position in thickness of the carcass
- 11: Soft rubber layer
- 12: Folded end
- 13: Slant reinforcing layer
- X: Section where a bead core is present

### Best Mode for carrying out the Invention

Hereinafter, an embodiment of the present invention will be described with reference to the drawings. Fig. 2 is a sectional view in the tire widthwise direction of a bead portion of a representative pneumatic tire according to the present invention (which will be referred to as "a tire" hereinafter).

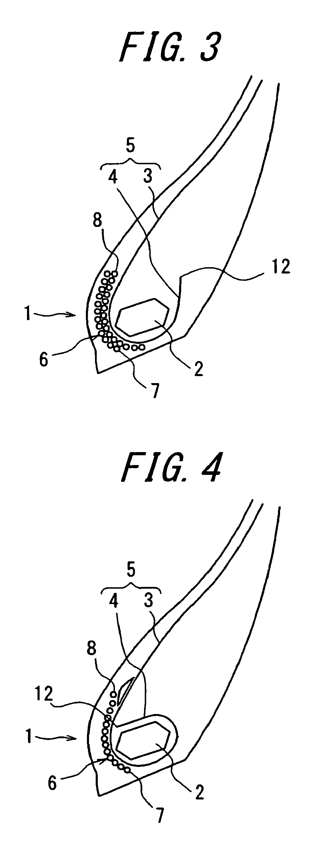

A bead portion 1 of the tire as shown in Fig. 2 includes a carcass 5 formed of a rubber-coated ply constituted of: a main body 3 extending in a toroidal shape over respective portions including a pair of bead portions 1 having bead cores 2 embedded therein (only one of the bead portions is shown in the drawings), a pair of sidewall portions extending on the outer side in the tire radial direction from the bead portions 1, and a tread portion extending over the respective sidewall portions; and a folded portion 4 extending from the main body 3 and being folded around the respective bead core 2 from the inner side toward the outer side in the tire widthwise direction. Further, the end 7 on the inner side in the tire radial direction of a monolayer circumferential direction reinforcing layer 6, which layer is formed of cords extending substantially along the circumferential direction and rubber coating thereon, is disposed on the inner face of the carcass 5 and the end 8 on the outer side in the tire radial direction thereof is distanced from the carcass 5 so that the end 8 is embedded in the bead portion 1. In the structure described above, the circumferential direction reinforcing layer 6 having relatively high rigidity is disposed at a portion of the tire which portion tends to collapse-deform when the tire is rotated with a load applied thereon. Accordingly, collapse-deformation is suppressed and separation of the carcass 5 from the rubber is prevented. Further, the cords of the reinforcing layers 8 and cords of the carcass 5 are disposed such that the respective cords intersect each other. Accordingly, when a tensile force is exerted on the carcass 5, the cords of the carcass 5 are hooked by the cords of the reinforcing layer 6, whereby the engagement force against the carcass 5 and thus the effect of preventing the carcass 5 from being pulled out of the bead portion is enhanced. If the circumferential direction reinforcing layer 6 were to be disposed completely along the carcass 5, as compared with the case in which the circumferential direction reinforcing layer 6 is partially distanced from the carcass 5, the separation distance between the bead core 2 and the circumferential direction reinforcing layer 6, though which the carcass 5 is interposed, is made relatively small at the overall length of the reinforcing layer, whereby a relatively larger area of the carcass portion is firmly interposed and occurrence of pulling-out of the carcass 5 is reliably suppressed. However, in this case where the circumferential direction reinforcing layer 6 is disposed completely along the carcass 5, since the area of the carcass portion which is strongly and repeatedly pulled when the tire is rotated under a load applied thereon is increases, as well, fatigue is accumulated therein and strength of the cords deteriorates at a larger area of the carcass portion. In the tire of the present invention, as shown in Fig. 2, the end portion 8 on the outer side in the tire radial direction of the circumferential direction reinforcing layer 6 is disposed so as to be distanced from the carcass 5. As a result, as compared with the case in which the circumferential direction reinforcing layer 6 is disposed completely along the carcass 5, while pulling-off of the carcass 5 is still suppressed, an area of the carcass portion interposed by the bead core 2 and the circumferential direction reinforcing layer 6 decreases and an area of the carcass portion, where fatigue is accumulated and thus cord strength deteriorates when the tire is rotated with a load applied thereon, also decreases accordingly, whereby durability of the bead portion 1 can be effectively enhanced. Further, since stresses do not concentrate on the carcass portion corresponding to the end portion 8 on the outer side in the tire radial direction and the vicinities thereof of the circumferential direction reinforcing layer 6 when the tire is rotated with a load applied thereon but are rather dispersed, the carcass 5 is free of fatigue, whereby deterioration of strength of the cords is prevented and durability of the bead portion 1 can be effectively enhanced. Yet further, as shown in Fig. 3, dual layered circumferential direction reinforcing layers 6 may be provided to more reliably suppress collapse-deformation.

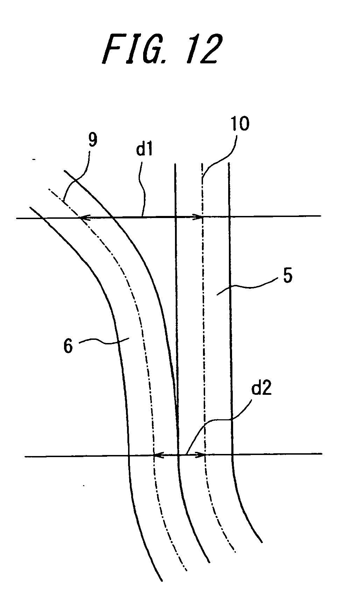

Yet further, it is preferable that the circumferential direction reinforcing layer 6 extends from the end 7 on the inner side toward the outer side in the tire radial direction thereof along the inner face of the carcass 5 by a predetermined length and starts separating from the carcass 5 such that the separation distance between the circumferential direction reinforcing layer 6 and the carcass 5 gradually increases toward the end portion 8 on the outer side in the tire radial direction of the circumferential direction reinforcing layer 6. In the case in which the separation distance gradually increases as described above, concentration of stresses on the cords of the carcass 5 portion in the vicinities of the end 8 on the outer side in the tire radial direction of the circumferential direction reinforcing layer 6, caused by concentration of stresses on the end 8, is avoided and stresses exerted on the carcass 5 from the end 8 on the outer side in the tire radial direction of the circumferential direction reinforcing layer 6 is dispersed stepwise, whereby stresses do not concentrate locally in other regions of the bead portion and thus deterioration of strength of the cords of the carcass 5 due to fatigue is more likely to be suppressed. In the present specification, a "separation distance" represents, as shown in Fig. 12, a value (d1 - d2) obtained by subtracting a distance d2 between the center position 9 in thickness of the circumferential direction reinforcing layer 6 and the center position 10 in thickness of the carcass 5, measured along the tire widthwise direction, in the non-separating state in a state in which the circumferential direction reinforcing layer 6 extends adjacent to the carcass, from a distance d1 between the center position 9 in thickness of the of the circumferential direction reinforcing layer 6 and the center position 10 in thickness of the carcass 5, measured along the tire widthwise direction, in the separating state in which the circumferential direction reinforcing layer 6 is separated from the carcass 5.

Yet further, it is preferable that the end portion 8 on the outer side in the tire radial direction of the circumferential direction reinforcing layer 6 is positioned, when viewed in the tire radial direction, on the outer side of the outermost end of the bead core 2. In a case in which the end portion on the outer side in the tire radial direction of the circumferential direction reinforcing layer 6 is positioned, when viewed in the tire radial direction, on the outer side of the outermost end of the bead core 2, stresses do not concentrate at the outermost end in the tire radial direction of the bead core 2 when the tire is rotated with a load applied thereon and thus collapse-deformation of the carcass 5 at a portion thereof in the vicinity of the outermost end in the tire radial direction of the bead core 2 can be suppressed, whereby deterioration of strength of the cords of the carcass portion in the vicinities of the outermost end in the tire radial direction of the bead core 2, caused by fatigue, is prevented and durability of the bead portion 1 is likely to be enhanced.

Yet further, it is preferable that the circumferential direction reinforcing layer 6 starts separating from the carcass 5 on the outer side in the tire radial direction of the outermost end of the bead core 2. If the circumferential direction reinforcing layer 6 were to start separating from the carcass 5 on the inner side in the tire radial direction of the outermost end of the bead core 2, rigidity of the carcass portion in the vicinity of the outermost end in the tire radial direction of the bead core 2 and rigidity of the carcass portions on the outer side in the tire radial direction of the outermost end of the bead core 2, which carcass portions tend to collapse-deform when the tire is rotated with a load applied thereon, would not be sufficiently enhanced, whereby collapse-deformation of the carcass 5 would not be effectively prevented and provision of the circumferential direction reinforcing layer 6 would not play the required role thereof, which is to enhance rigidity of the carcass 5 and prevent collapse-deformation from occurring. Further, in the aforementioned structure of the present invention, since the circumferential direction reinforcing layer 6 starts separating from the carcass 5 on the outer side of the outermost end of the bead core 2, an area where the carcass 5 is interposed by the bead core 2 and the circumferential direction reinforcing layer 6 is increased on the inner side in the tire radial direction of the tire radial-direction outermost end of the bead core 2 and thus an effect of interposing the carcass 5 by the bead core 2 and the circumferential direction reinforcing layer 6 is enhanced, whereby the carcass 5 is less likely to be pulled out.

Yet further, the separation distance between the carcass 5 and the end portion 8 on the outer side in the tire radial direction of the circumferential direction reinforcing layer 6 is preferably in a range of 0.5 to 7.0 mm and more preferably in a range of 0.5 to 5.0 mm. In a case in which the separation distance between the carcass 5 and the end portion on the outer side in the tire radial direction of the circumferential direction reinforcing layer 6 is smaller than 0.5 mm, rigidity of the carcass portion at the end 8 on the outer side in the tire radial direction and in the vicinities thereof of the circumferential direction reinforcing layer 6 is excessively enhanced and excessive difference in rigidity is generated in a stepwise manner in the carcass portion, whereby a portion having relatively large stepwise difference in rigidity tends to collapse-deform and stresses concentrate in a localized manner at the carcass portion corresponding to the end 8 on the outer side in the tire radial direction and the vicinities thereof, of the circumferential direction reinforcing layer 6. As a result, localized fatigue of the cords of the carcass 5 may arise, deteriorating durability of the bead portion 1 and it may be difficult to ensure a region where a soft rubber layer 11 is to be disposed. On the other hand, in a case in which the separation distance between the carcass 5 and the end portion on the outer side in the tire radial direction of the circumferential direction reinforcing layer 6 exceeds 7.0 mm, the separation distance between the carcass 5 and the circumferential direction reinforcing layer 6 is too large, whereby rigidity of a region where collapse-deformation of the carcass 5 tends to occur cannot be sufficiently enhanced. As a result, in this case, collapse-deformation may not be suppressed in a satisfactory manner when the tire is rotated with a load applied thereon and fatigue of the carcass 5 due to the collapse-deformation may arise, resulting in deterioration of durability of the bead portion 1.

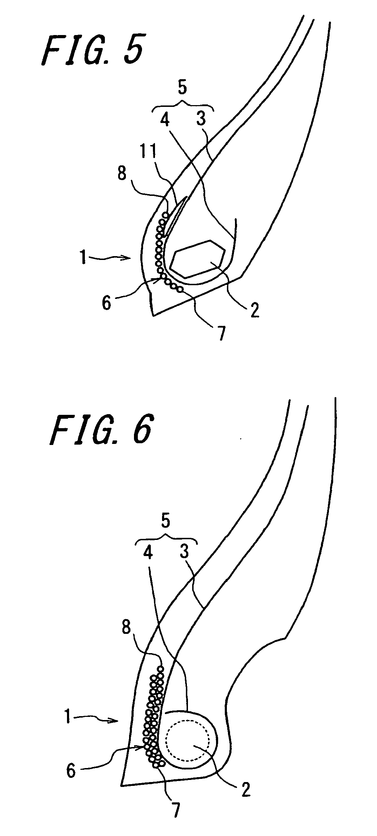

Further, as shown in Fig. 4 or Fig. 5, it is preferable that a soft rubber layer 11, formed of rubber having 100% modulus lower than that of the coating rubber of the cords constituting the carcass 5, is disposed in a region where the circumferential direction reinforcing layer 6 is distanced from the carcass 5. In this structure, the soft rubber layer 11, formed of rubber having 100% modulus lower than that of the coating rubber of the cords constituting the carcass 5, is disposed in a region where the circumferential direction reinforcing layer 6 is distanced from the carcass 5, i.e. a region where an effect of dispersing localized concentration of stresses would be obtained by making the circumferential direction reinforcing layer 6 apart from the carcass 5 by a relatively large magnitude. As a result, without the necessity of making the circumferential direction reinforcing layer 6 widely apart from the carcass 5, there can be obtained an effect of dispersing localized concentration of stresses, which effect is similar to the effect which would be obtained when the circumferential direction reinforcing layer 6 were to be widely distanced from the carcass 5, because the soft rubber layer increases softness at the region where the circumferential direction reinforcing layer 6 is distanced from the carcass 5. Accordingly, there may be overcome difficulties in the production process resulting from making the circumferential direction reinforcing layer 6 apart from the carcass 5 and it may be possible to ensure the softness obtained in the conventional structure of a bead portion without having increase in weight and/or restraint in shape of the bead portion 1, which increase and/or restraint would be caused by making the circumferential direction reinforcing layer 6 wide apart from the carcass 5.

Yet further, as shown in Fig. 4 or Fig. 5, it is preferable that the end on the outer side in the tire radial direction of the soft rubber layer 11 is positioned on the outer side in the tire radial direction of the end 8 on the outer side in the tire radial direction of the circumferential direction reinforcing layer 6. In a structure in which the end on the outer side in the tire radial direction of the soft rubber layer 11 is positioned on the outer side in the tire radial direction of the end 8 on the outer side in the tire radial direction of the circumferential direction reinforcing layer 6, as compared with a structure in which the end on the outer side in the tire radial direction of the soft rubber layer 11 is positioned on the inner side in the tire radial direction of the end 8 on the outer side in the tire radial direction of the circumferential direction reinforcing layer 6, the soft rubber layer 11 is disposed in a sufficiently wide area of the region where excessive stresses tend to concentrate, whereby stresses are more likely to be dispersed in a reliable manner so that stresses do not locally concentrate at the carcass portion corresponding to the end 8 on the outer side in the tire radial direction and the vicinities thereof of the circumferential direction reinforcing layer 6.

Yet further, it is preferable that the ratio of 100% modulus of the soft rubber constituting the soft rubber layer 11 with respect to the 100% modulus of the coating rubber for the cords constituting the carcass 5 is in a range of 0.4 to 0.9 and more preferably in a range of 0.5 to 0.7. If the ratio of 100% modulus of the soft rubber constituting the soft rubber layer 11 with respect to that of the coating rubber for the cords constituting the carcass 5 is larger than 0.4, the difference in rigidity between the soft rubber layer 11 and the coating rubber for the cords constituting the carcass 5 is too large, whereby stresses excessively concentrate in the interface region between the soft rubber layer 11 and the coating rubber for the cords constituting the carcass 5 when the tire is rotated with a load applied thereon. As a result, fatigue accumulates in the interface region, and separation between the soft rubber layer and the coating rubber for the cords constituting the carcass 5 may occur. If the 100% modulus ratio is smaller than 0.9, the 100% modulus ratio of the soft rubber layer 11 is then substantially equal to the 100% modulus ratio of the coating rubber for the cords constituting the carcass 5 and the effect caused by provision of the soft rubber layer 11 may not be obtained in an effective manner.

Yet further, 100% modulus of the soft rubber constituting the soft rubber layer is preferably in a range of 1.5 to 6.5 MPa and more preferably in a range of 2.5 to 5.0 MPa. If 100% modulus of the soft rubber exceeds 5.0 MPa, rigidity of the soft rubber is unnecessarily high, whereby concentration of stresses at a carcass portion along the circumferential direction reinforcing layer 6 and the vicinities thereof may not be sufficiently dispersed and the carcass portion may suffer from fatigue. If 100% modulus of the soft rubber is smaller than 1.5 MPa, localized concentration of stresses at a carcass portion corresponding to the end 8 on the outer side in the tire radial direction and the vicinities thereof, of the circumferential direction reinforcing layer 6, in tire rotation with a load applied thereon, is sufficiently dispersed. However, since rigidity of the vicinities of the soft rubber layer 11 is too small in this case, the effect caused by provision of the circumferential direction reinforcing layer 6 deteriorates and collapse-deformation of the bead portion 1 when the tire is rotated with a load applied thereon may not be sufficiently prevented.

Yet further, as shown in Figs. 2, 4 and 6-8, it is preferable that the entire part of the folded portion 4 of the carcass 5 is folded along the bead core 2. In the above-described structure in which the entire part of the folded portion 4 is folded along the bead core 2, in case the bead portion 1 is collapse-deformed on the outer side in the tire widthwise direction when the tire assembled with a rim is rotated with a load applied thereon, stresses are less likely to concentrate at the folded end 12 and cracks are less likely to be generated between the rubber and the folded end 12, whereby the carcass 5 is less likely to be separated from the rubber. Further, in the above-described structure, since engagement force against tensile force is enhanced due to somehow winding the carcass 5 around the bead core 2, the carcass 5 is less likely to be pulled out of the bead portion 1. Further, in the structure described above, it is preferable that the folded portion 4 of the carcass 5 is plastically folded along the bead core 2. As a result of plastically folding, as compared with elastically folding, the folded portion 4 of the carcass 5 takes on a shape well corresponding to the bead core 2 and thus the overall separation distance or clearance between the folded portion 4 of the carcass 5 and the bead core 2 is relatively small, whereby the folded portion 4 of the carcass 5 is firmly engaged with the bead core 2 and therefore the engagement force resisting tensile force toward the outer side in the tire radial direction of the carcass 5 is further improved, which further prevents the carcass 5 from being pulled out of the bead portion 1.

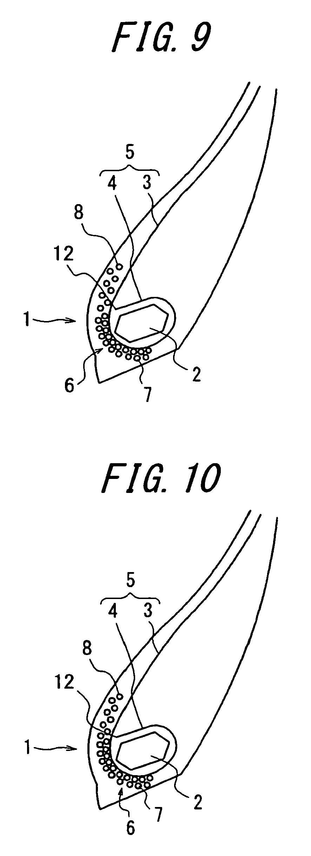

Yet further, as shown in Fig. 9, it is preferable that the driving density of the cords of the circumferential direction reinforcing layers 6 at the end portion on the outer side in the tire radial direction thereof is relatively small, as compared with that at other portions thereof. In the above-described structure in which at least a carcass portion on the inner side in the tire widthwise direction of the bead core 2 is interposed by a portion of the circumferential direction reinforcing layer having cords of relatively large cord driving density and the bead core 2, since a force pushing the bead portion 1 from the inner side toward the outer side in the tire widthwise direction is exerted due to the internal pressure of the tire, the carcass 5 is firmly interposed and thus the carcass 5 is reliably prevented from being pulled out of the bead portion. Regarding the cords on the outer side in the tire radial direction of the circumferential direction reinforcing layer 6, since the cord more on the outer side in the tire radial direction is farther distanced from the bead core 2, provision of the circumferential direction reinforcing layer 6 in such a position distanced from the bead core 2 brings only a minor interposing effect, whereby decreasing the driving density of the cords positioned on the outer side in the tire radial direction of the circumferential direction reinforcing layer 6 does not so significantly affect interposing the carcass 5 between the circumferential direction reinforcing layer 6 and the bead core 2. In short, concentration of stresses on the carcass 5 at the end portion on the outer side in the tire radial direction of the circumferential direction reinforcing layer 6 can be suppressed by decreasing the driving density of the cords at the end portion on the outer side in the tire radial direction of the circumferential direction reinforcing layer 6, so that durability of the bead portion 1 is improved. In the structure described above, within the scope of the aforementioned structure, the driving density of the cords of the circumferential direction reinforcing layer 6 may be uneven at at least a part of the reinforcing layer 6.

Further, as shown in Fig. 10, it is preferable that the driving density of the cords of the circumferential direction reinforcing layer 6 gradually increases, up to a predetermined value, from the end on the outer side in the tire radial direction thereof toward a position thereof on the inner side in the tire widthwise direction at the innermost end in the tire widthwise direction of the bead core 2. The closer the circumferential direction reinforcing layer 6 is to the position thereof on the inner side in the tire widthwise direction at the innermost end in the tire widthwise direction of the bead core 2, the smaller the distance between the bead core 2 and the circumferential direction reinforcing layer 6 and the more firmly the carcass 5 is interposed therebetween. Therefore, by increasing up to a predetermined value the driving density of the cords of the circumferential direction reinforcing layer 6, from the end on the outer side in the tire radial direction thereof toward a position thereof on the inner side in the tire widthwise direction at the innermost end in the tire widthwise direction of the bead core 2, the carcass 5 can be firmly interposed by the portion of the circumferential direction reinforcing layer having cords of relatively large cord driving density and the bead core 2, whereby the carcass 5 can be effectively prevented from being pulled out of the bead portion 1. Further, since the cords positioned more distanced on the outer side in the tire radial direction of the circumferential direction reinforcing layer 6 has smaller cord driving density in the structure described above, concentration of stresses on the carcass 5 can be suppressed so that durability of the bead portion 1 is improved.

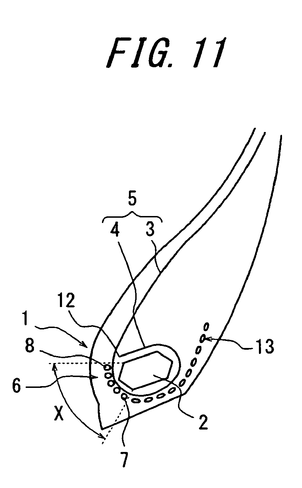

Yet further, as shown in Fig. 11, it is preferable that when viewed in the tire widthwise direction the circumferential direction reinforcing layer 6 exists at a section X where the bead core 2 is present To firmly interpose the carcass 5 by the circumferential direction reinforcing layer 6 and the bead core 2 and effectively prevent the carcass 5 from being pulled out of the bead portion 1, it suffices to interpose at least a carcass potion on the inner side in the tire widthwise direction of the bead core 2 by the circumferential direction reinforcing layer 6 and the bead core 2 because a force pushing the bead portion 1 from the inner side toward the outer side in the tire widthwise direction is exerted due to the internal pressure of the tire. Further, in the structure described above, it is preferable that a slant reinforcing layer 13, formed of cords extending inclined with respect to the tire circumferential direction and coating rubber thereon, is disposed such that the slant reinforcing layer is adjacent to the circumferential direction reinforcing layer 6 on the inner side in the tire radial direction of the circumferential direction reinforcing layer 6. In the structure described above, the cords constituting the slant reinforcing layer 13, which extend in a direction inclined with respect to the tire circumferential direction, enhances rigidity against deformation in the tire circumferential direction of the bead portion 1 and suppresses, when the tire is rotated under a load applied thereon, deformation in the tire circumferential direction of the bead portion 1 corresponding to a tread region from a road surface contact starting position and the vicinity thereof to a road surface contact completing position and the vicinity thereof, which deformation is caused by friction between the tread and a road surface, whereby rim slippage can be effective prevented.

The shape of the bead core 2 may be modified to various shapes including an ellipsoidal shape and other polygonal shapes. The foregoing descriptions show only a part of possible embodiments of the present invention, and the aforementioned structures may be combined, interchanged or subjected to various modifications unless such modifications digress from the sprit of the present invention.

### Examples

Next, tires according to the present invention having the bead portions as shown in Figs. 2 to 7 (Examples tires) and tires having the conventional bead portions (Conventional tires) were prepared and the performances thereof were evaluated, respectively. Details thereof will be described below.

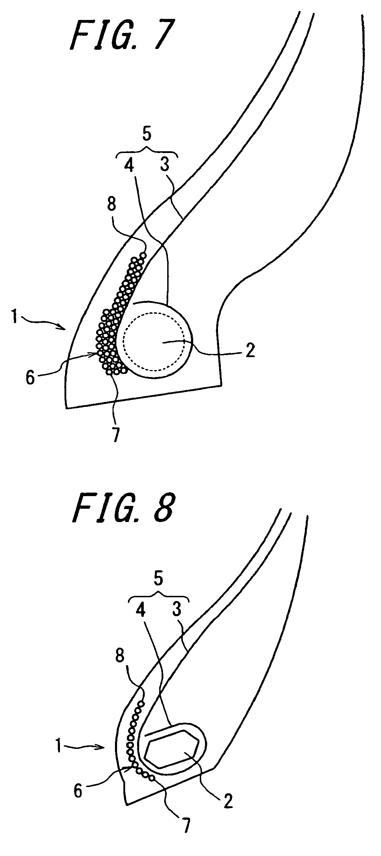

The tires of Examples 1 to 5 are tires for bus/truck having bead portions structured as shown in Figs. 2-6, respectively. The tire of Example 6 is a tire for construction vehicle having a bead portion structured as shown in Fig. 7. The tires of Conventional Examples 1, 2, 5 and 6 have basically the same structures as the tires of Examples 1, 2, 5 and 6, respectively, except that the separation distance between the carcass and the end portion on the outer side in the tire radial direction of the circumferential direction reinforcing layer of Conventional Example 1, 2, 5 and 6 tires are 0 (mm) (not shown in the drawings). Further, the tires of Conventional Examples 3 and 4 have basically the same structures as the tires of Examples 3 and 4, respectively, except that the soft rubber layer is not provided and the separation distance between the carcass and the end portion on the outer side in the tire radial direction of the circumferential direction reinforcing layer of Conventional Example 3 and 4 tires are 0 (mm) (not shown in the drawings). The reinforcing layers of these Example tires and Conventional Example tires are formed of steel cords each having characteristics as shown in Table 1.

**Table 1**

| | Fig. | Tire size | Rim size | Soft rubber/Ply coating rubber (100%Mod) | Separation Distance (mm) | Diameter of Reinforcing layer cord (mm) |
|---|---|---|---|---|---|---|
| Example 1 | 2 | 11R22.5 | 8.25×22.5 | - | 2 | 1.8 |
| Example 2 | 3 | 11R22.5 | 8.25×22.5 | - | 3 | 1.1 |
| Example 3 | 4 | 295/75R22.5 | 825×22.5 | 0.6 | 1.5 | 1.1 |
| Example 4 | 5 | 435/45R22.5 | 14×22.5 | 0.7 | 1 | 1.8 |
| Example 5 | 6 | 1000R20 | 7.50×22.5 | - | 4 | 1.1 |
| Example 6 | 7 | 59/80R63 | 44×63 | - | 5 | 2.3 |

The Example tires and Conventional Example tires were assemble with rims of predetermined size as shown in Table 1, to be made as tire wheels. These tire wheels were mounted to a test vehicle, and the test vehicle was driven a predetermined distance, while various conditions including the tire internal pressure (expressed as a relative pressure), tire load weight and the like as shown in Table 2 were applied thereto. Then the ply was taken out of each tire and tensile fracture strength of cords constituting the ply was measured to evaluate durability of the bead portion.

The evaluation results of the tests are shown in Table 2. The evaluation results in Table 2 are expressed as index ratios with respect to the tensile fracture strengths of the cords constituting the carcass of the corresponding tires of Conventional Examples, which tensile fracture strengths of the Conventional Example tires being converted to 100, respectively. The larger evaluation values indicate the better performances.

**Table 2**

| | Fig. | Internal Pressure (kPa) | Tire Load Weight (kN) | Running Speed (km/h) | Room Temperature (°C) | Running distance (km) | Evaluation |
|---|---|---|---|---|---|---|---|
| Example 1 | 2 | 700 | 25 | 70 | 38 | 200,000 | 130 |
| Example 2 | 3 | 700 | 25 | 70 | 38 | 200,000 | 125 |
| Example 3 | 4 | 660 | 25 | 70 | 38 | 200,000 | 120 |
| Example 4 | 5 | 900 | 50 | 70 | 38 | 200,000 | 123 |
| Example 5 | 6 | 725 | 27 | 70 | 38 | 200,000 | 130 |
| Example 6 | 7 | 600 | 1016 | 20 | 38 | 50,000 | 135 |

As shown by the results in Table 2, the evaluated tensile fracture strength values of the Example tires were increased by 20 to 35%, respectively, as compared with the corresponding tires of Conventional Examples. Accordingly, it is understood that the structures according to the present invention prevents strength of cords constituting a carcass from being deteriorated due to fatigue, thereby improving duration of the bead portion.

### Industrial Applicability

As is obvious from the results described above, there can be obtained a pneumatic tire in which the structure of a bead portion is optimized to prevent strength of cords constituting a carcass from being deteriorated due to fatigue, so that durability of the bead portion can be improved.

## Claims

1. A pneumatic tire having a carcass (5) formed of at least one rubber-coated ply constituted of: a main body (3) extending in a toroidal shape over respective portions including a pair of bead portions (1) having bead cores (2) embedded therein, a pair of sidewall portions extending on the outer side in the tire radial direction from the bead portions, and a tread portion extending over the respective sidewall portions; and a folded portion (4) extending from the main body and being folded around the respective bead cores from the inner side toward the outer side in the tire widthwise direction, the tire comprising,
at least one circumferential direction reinforcing layer (6) formed of cords extending substantially in the tire circumferential direction and rubber coating thereon, the end (7) on the inner side in the tire radial direction of the reinforcing layer being disposed on the inner face of the carcass and **characterised by** the end (8) on the outer side in the tire radial direction thereof being embedded in the bead portion such that the end on the outer side in the tire radial direction is distanced from the carcass, and by a soft rubber layer (11) formed of rubber having 100% modulus lower than that of the coating rubber for the cords constituting the carcass being disposed in a region where the circumferential direction reinforcing layer is distanced from the carcass.

2. The pneumatic tire of claim 1, wherein the circumferential direction reinforcing layer extends along the inner face of the carcass by a predetermined length from the end portion on the inner side toward the outer side in the tire radial direction and starts separating from the carcass such that the separation distance between the circumferential direction reinforcing layer and the carcass gradually increases toward the end portion on the outer side in the tire radial direction of the circumferential direction reinforcing layer.

3. The pneumatic tire of claim 1 or 2, wherein the end portion on the outer side in the tire radial direction of the reinforcing layer is positioned, when viewed from the tire radial direction, on the outer side of the outermost end of the bead core.

4. The pneumatic tire of claim 3, wherein the circumferential direction reinforcing layer starts separating from the carcass on the outer side in the tire radial direction of the outermost end of the bead core.

5. The pneumatic tire of any of claims 1 to 4, wherein the separation distance between the carcass and the end on the outer side in the tire radial direction of the circumferential direction reinforcing layer is in a range of 0.5 to 7.0 mm.

6. The pneumatic tire of any preceding claim, wherein the end portion on the outer side in the tire radial direction of the soft rubber layer is positioned on the outer side in the tire radial direction of the end portion in the outer side in the tire radial direction of the circumferential direction outer reinforcing layer.

7. The pneumatic tire of any preceding claim, wherein the ratio of 100% modulus of the soft rubber constituting the soft rubber layer with respect to that of the coating rubber for cords constituting the carcass is in a range of 0.4 to 0.9.

8. The pneumatic tire of any preceding claim, wherein 100% modulus of the soft rubber constituting the soft rubber layer is in a range of 1.5 to 6.5 MPa.

9. The pneumatic tire of any of claims 1 to 8, wherein the entire part of the folded portion of the carcass is folded along the bead core.

10. The pneumatic tire of claim 9, wherein the entire part of the folded portion is plastically folded along the bead core.

11. The pneumatic tire of any of claims 1 to 10, wherein the driving density of cords in the circumferential direction reinforcing layer is relatively small at the end portion on the outer side in the tire radial direction thereof, as compared with the cord driving density at other portions of the circumferential direction reinforcing layer.

12. The pneumatic tire of any of claims 1 to 11, wherein the driving density of cords in the reinforcing layer gradually increases from the end portion on the outer side in the tire radial direction of the circumferential direction reinforcing portion toward a position thereof on the inner side in the tire widthwise direction at the innermost end in the tire widthwise direction of the bead core.

13. The pneumatic tire of any of claims 1 to 12, wherein the reinforcing layer is provided, when viewed in the tire widthwise direction, at least in a section where the bead core is present.

14. The pneumatic tire of claim 13, wherein a slant reinforcing layer (13), formed of cords extending inclined with respect to the tire circumferential direction and coating rubber thereon, is disposed such that the slant reinforcing layer is adjacent to the circumferential direction reinforcing layer on the inner side in the tire radial direction of the circumferential direction reinforcing layer.

## Patentansprüche

1. Luftreifen, der eine Karkasse (5) hat, die aus wenigstens einer gummiüberzogenen Schicht geformt ist, die aus Folgendem besteht: einem Hauptkörper (3), der sich in einer kreisringförmigen Gestalt über jeweilige Abschnitte erstreckt, einschließlich eines Paares von Wulstabschnitten (1), die in denselben eingebettete Wulstkern (2) haben, eines Paares von Seitenwandabschnitten, die sich auf der in der Reifenradialrichtung äußeren Seite von den Wulstabschnitten aus erstrecken, und eines Laufflächenabschnitts, der sich über die jeweiligen Seitenwandabschnitte erstreckt, und einem gefalteten Abschnitt (4), der sich von dem Hauptkörper aus erstreckt und von der in der Reifenbreitenrichtung inneren Seite zu der äußeren Seite hin um die jeweiligen Wulstkerne gefaltet ist, wobei der Reifen Folgendes umfasst:
wenigstens eine in Umfangsrichtung verstärkende Lage (6), die aus Kords, die sich im Wesentlichen in der Reifenumfangsrichtung erstrecken, und einem Gummiüberzug auf denselben geformt ist, wobei das Ende (7) der verstärkenden Lage auf der in der Reifenradialrichtung inneren Seite auf der inneren Fläche der Karkasse angeordnet ist, und **dadurch gekennzeichnet, dass** das Ende (8) derselben auf der in der Reifenradialrichtung äußeren Seite in dem Wulstabschnitt eingebettet ist derart, dass das Ende auf der in der Reifenradialrichtung äußeren Seite mit Abstand von der Karkasse angeordnet ist, und **dadurch**, dass eine weiche Gummilage (11), die aus einem Gummi geformt ist, der einen 100%-Modul hat, der niedriger ist als derjenige des Überzugsgummis für die Kords, welche die Karkasse ausmachen, in einem Bereich angeordnet ist, wo die in Umfangsrichtung verstärkende Lage mit Abstand von der Karkasse angeordnet ist.

2. Luftreifen nach Anspruch 1, wobei sich die in Umfangsrichtung verstärkende Lage um eine vorbestimmte Länge längs der inneren Fläche der Karkasse von dem Endabschnitt auf der in der Reifenradialrichtung inneren Seite zu der äußeren Seite hin erstreckt und beginnt, sich von der Karkasse zu trennen derart, dass der Trennungsabstand zwischen der in Umfangsrichtung verstärkenden Lage und der Karkasse zu dem Endabschnitt der in Umfangsrichtung verstärkenden Lage auf der in der Reifenradialrichtung äußeren Seite hin allmählich zunimmt.

3. Luftreifen nach Anspruch 1 oder 2, wobei der Endabschnitt der verstärkenden Lage auf der in der Reifenradialrichtung äußeren Seite, wenn er aus der Reifenradialrichtung betrachtet wird, auf der äußeren Seite des äußersten Endes des Wulstkerns angeordnet ist.

4. Luftreifen nach Anspruch 3, wobei die in Umfangsrichtung verstärkende Lage auf der in der Reifenradialrichtung äußeren Seite des äußersten Endes des Wulstkerns beginnt, sich von der Karkasse zu trennen.

5. Luftreifen nach einem der Ansprüche 1 bis 4, wobei der Trennungsabstand zwischen der Karkasse und dem Ende auf der in der Reifenradialrichtung äußeren Seite der in Umfangsrichtung verstärkenden Lage in einem Bereich von 0,5 bis 7,0 mm liegt.

6. Luftreifen nach einem der vorhergehenden Ansprüche, wobei der Endabschnitt auf der in der Reifenradialrichtung äußeren Seite der weichen Gummilage auf der in der Reifenradialrichtung äußeren Seite des Endabschnitts in der in der Reifenradialrichtung äußeren Seite der äußeren in Umfangsrichtung verstärkenden Lage angeordnet ist.

7. Luftreifen nach einem der vorhergehenden Ansprüche, wobei das Verhältnis des 100%-Moduls des weichen Gummis, der die weiche Gummilage ausmacht, in Bezug auf denjenigen des Überzugsgummis für die Kords, welche die Karkasse ausmachen, in einem Bereich von 0,4 bis 0,9 liegt.

8. Luftreifen nach einem der vorhergehenden Ansprüche, wobei der 100%-Modul des weichen Gummis, der die weiche Gummilage ausmacht, in einem Bereich von 1,5 bis 6,5 MPa liegt.

9. Luftreifen nach einem der Ansprüche 1 bis 8, wobei der gesamte Teil des gefalteten Abschnitts der Karkasse längs des Wulstkerns gefaltet ist.

10. Luftreifen nach Anspruch 9, wobei der gesamte Teil des gefalteten Abschnitts plastisch längs des Wulstkerns gefaltet ist.

11. Luftreifen nach einem der Ansprüche 1 bis 10, wobei die Treibdichte von Kords in der in Umfangsrichtung verstärkenden Lage an dem Endabschnitt derselben auf der in der Reifenradialrichtung äußeren Seite, verglichen mit der Kord-Treibdichte an anderen Abschnitten der in Umfangsrichtung verstärkenden Lage, verhältnismäßig klein ist.

12. Luftreifen nach einem der Ansprüche 1 bis 11, wobei die Treibdichte von Kords in der verstärkenden Lage von dem Endabschnitt der in Umfangsrichtung verstärkenden Lage auf der in der Reifenradialrichtung äußeren Seite zu einer Position derselben auf der in der Reifenbreitenrichtung inneren Seite an dem in der Reifenbreitenrichtung innersten Ende des Wulstkerns hin allmählich zunimmt.

13. Luftreifen nach einem der Ansprüche 1 bis 12, wobei die verstärkende Lage, wenn sie in der Reifenbreitenrichtung betrachtet wird, wenigstens in einer Sektion bereitgestellt wird, wo der Wulstkern vorhanden ist.

14. Luftreifen nach Anspruch 13, wobei eine schräge verstärkende Lage (13), die aus Kords, die sich in Bezug auf die Reifenumfangsrichtung geneigt erstrecken, und Überzugsgummi auf denselben geformt ist, derart angeordnet ist, dass sich die schräge verstärkende Lage angrenzend an die in Umfangsrichtung verstärkende Lage auf der in der Reifenradialrichtung inneren Seite der in Umfangsrichtung verstärkenden Lage befindet.

## Revendications

1. Bandage pneumatique, comportant une carcasse (5) formée d'au moins une nappe revêtue de caoutchouc constitué de : un corps principal (3), s'étendant en une forme toroïdale au-dessus de parties respectives, englobant une paire de parties de talon (1) comportant des tringles (2) qui y sont noyées, une paire de parties de flanc, s'étendant sur le côté externe, dans la direction radiale du bandage pneumatique, à partir des parties de talon, et une partie de bande de roulement s'étendant au-dessus des parties de flanc respectives ; et une partie pliée (4), s'étendant à partir du corps principal et étant pliée autour des tringles respectives, du côté interne vers le côté externe dans la direction de la largeur du bandage pneumatique, le bandage pneumatique comprenant :
au moins une couche de renforcement dans la direction circonférentielle (6), formée de câblés s'étendant pratiquement dans la direction circonférentielle du bandage pneumatique et d'un revêtement de caoutchouc sur ceux-ci, l'extrémité (7) sur le côté interne, dans la direction radiale du bandage pneumatique, de la couche de renforcement étant agencée sur la face interne de la carcasse, et **caractérisé en ce que** l'extrémité (8) de celle-ci sur le côté externe, dans la direction radiale, est noyée dans la partie de talon, de sorte que l'extrémité sur le côté externe, dans la direction radiale du bandage pneumatique, est espacée de la carcasse, et **en ce qu'**une couche de caoutchouc mou (11) formée de caoutchouc ayant un module à 100% inférieur à celui du caoutchouc de revêtement des câblés constituant la carcasse, est agencée dans une région dans laquelle la couche de renforcement dans la direction circonférentielle est espacée de la carcasse.

2. Bandage pneumatique selon la revendication 1, dans lequel la couche de renforcement dans la direction circonférentielle s'étend le long de la face interne de la carcasse sur une longueur prédéterminée, de la partie d'extrémité du côté interne vers le côté externe, dans la direction radiale du bandage pneumatique, et commence à se séparer de la carcasse, de sorte que la distance de séparation entre la couche de renforcement dans la direction circonférentielle et la carcasse est progressivement accrue vers la partie d'extrémité du côté externe, dans la direction radiale du bandage pneumatique, de la couche de renforcement dans la direction circonférentielle.

3. Bandage pneumatique selon les revendications 1 ou 2, dans lequel la partie d'extrémité sur le côté externe, dans la direction radiale du bandage pneumatique, de la couche de renforcement, est positionnée, vue dans la direction radiale du bandage pneumatique, sur le côté externe de l'extrémité externe extrême de la tringle.

4. Bandage pneumatique selon la revendication 3, dans lequel la couche de renforcement dans la direction circonférentielle commence à se séparer de la carcasse sur le côté externe, dans la direction radiale du bandage pneumatique, de l'extrémité externe extrême de la tringle.

5. Bandage pneumatique selon l'une quelconque des revendications 1 à 4, dans lequel la distance de séparation entre la carcasse et l'extrémité sur le côté externe, dans la direction radiale du bandage pneumatique, de la couche de renforcement dans la direction circonférentielle, est comprise dans l'intervalle allant de 0,5 à 7,0 mm.

6. Bandage pneumatique selon l'une quelconque des revendications précédentes, dans lequel la partie d'extrémité sur le côté externe, dans la direction radiale du bandage pneumatique, de la couche de caoutchouc mou, est positionnée sur le côté externe, dans la direction radiale du bandage pneumatique, de la partie d'extrémité dans le côté externe, dans la direction radiale du bandage pneumatique, de la couche de renforcement externe dans la direction circonférentielle.

7. Bandage pneumatique selon l'une quelconque des revendications précédentes, dans lequel le rapport entre le module à 100% du caoutchouc mou constituant la couche de caoutchouc mou et celui du caoutchouc de revêtement des câblés constituant la carcasse, est compris dans l'intervalle allant de 0,4 à 0,9.

8. Bandage pneumatique selon l'une quelconque des revendications précédentes, dans lequel le module à 100% du caoutchouc mou constituant la couche de caoutchouc mou est compris dans l'intervalle allant de 1,5 à 6,5 MPa.

9. Bandage pneumatique selon l'une quelconque des revendications 1 à 8, dans lequel l'ensemble de la partie pliée de la carcasse est pliée le long de la tringle.

10. Bandage pneumatique selon la revendication 9, dans lequel l'ensemble de la partie pliée est pliée de manière plastique le long de la tringle.

11. Bandage pneumatique selon l'une quelconque des revendications 1 à 10, dans lequel la densité d'entraînement des câblés dans la couche de renforcement dans la direction circonférentielle est relativement réduite au niveau de la partie d'extrémité de ceux-ci sur le côté externe, dans la direction radiale du bandage pneumatique, par rapport à la densité d'entraînement des câblés au niveau d'autres parties de la couche de renforcement dans la direction circonférentielle.

12. Bandage pneumatique selon l'une quelconque des revendications 1 à 11, dans lequel la densité d'entraînement des câblés dans la couche de renforcement est progressivement accrue à partir de la partie d'extrémité sur le côté externe, dans la direction radiale du bandage pneumatique, de la partie de renforcement dans la direction circonférentielle, vers une position de celle-ci située sur le côté interne, dans la direction de la larguer du bandage pneumatique, au niveau de l'extrémité interne extrême, dans la direction de la largeur du bandage pneumatique, de la tringle.

13. Bandage pneumatique selon l'une quelconque des revendications 1 à 12, dans lequel la couche de renforcement est agencée, vue dans la direction de la largeur du bandage pneumatique, au moins dans une section dans laquelle la tringle est présente.

14. Bandage pneumatique selon la revendication 13, dans lequel une couche de renforcement inclinée (13), formée de câblés s'étendant de manière inclinée par rapport à la direction circonférentielle du bandage pneumatique, et d'un revêtement de caoutchouc sur ceux-ci, est agencée de sorte que la couche de renforcement inclinée est adjacente à la couche de renforcement dans la direction circonférentielle sur le côté interne, dans la direction radiale du bandage pneumatique, de la couche de renforcement dans la direction circonférentielle.
